# EUROPEAN PATENT APPLICATION

(11) **EP 2 530 448 A2**
(43) Date of publication of application: **05.12.2012**
(21) Application number: 12169911.0
(22) Date of filing: 30.05.2012
(51) Int. Cl.: G01M 13/02, F03D 1/06, F03D 7/02

(54) **System and method for monitoring turbine blade**

(30) Priority: 01.06.2011 US 201113150336
(71) Applicant: General Electric Company, Schenectady, NY 12345 (US)
(72) Inventor: Baller, Marko Klaus, Niskayuna, New York 12309 (US); Sihler, Christof Martin, Niskayuna, New York 12309 (US); Breit, Michael, 85737 Ismaning (DE)
(74) Representative: Bedford, Grant Richard

(57) **Abstract**

A system 200 for monitoring mechanical stress on a turbine blade 130 is disclosed. The system includes a ferromagnetic blade mount 220, a magnetic sensor 204, and a processor. The ferromagnetic blade mount includes a magnetically encoded region. The magnetic sensor 204 is configured to measure magnetic flux linked with the magnetically encoded region. The processor is communicably coupled with the magnetic sensor 204 to compute a blade health indicator based, at least in part, on the measured magnetic flux.

## Description

Various embodiments presented herein relate generally to monitoring systems, and more specifically to a system for monitoring mechanical stress on a turbine blade.

Wind turbines are becoming important for renewable power. Wind turbines convert wind energy into electrical energy. Wind blowing over the blades causes the blades to produce 'lift' and thus rotate about a shaft. The shaft drives a generator that produces electrical energy. Under normal operating conditions, the blades may be exposed to relatively large and variable aerodynamic load due to varying wind conditions. Further, wind turbines are also exposed to unpredictable harsh weather conditions. This problem is aggravated for off-shore wind farms. Modem wind turbines are installed with overspeed protection mechanisms such as aerodynamically braking blades and friction brakes, to protect the wind turbine from damage against high wind speeds. However, normal operation of the wind turbine subjects the wind turbine blades to mechanical stresses causing the blades to twist, flap at the blade tips, or bend in the plane of rotation. This mechanical stress may cause the blade to develop cracks. Such cracks if not detected in time, may lead to catastrophic wind turbine failure.

This problem is partly mitigated by blade monitoring systems that provide wind turbine prognostic data, and help detect impending blade failure. Some known blade monitoring systems monitor mechanical stress using sensors installed on the blades of the wind turbine. For example, vibration sensors are generally mounted outside the blades of the wind turbine for measuring vibration occurring on the blades. However, such sensors are subjected to harsh weather condition, such as high speed wind, rainfall, snow, hail and the like, which may shorten the life of the sensors. Therefore, outboard sensor systems may require frequent maintenance for reliable operation. On the other hand, inboard sensor systems may be difficult to install and maintain.

Therefore, there is a need for a wind turbine monitoring system that overcomes these and other problems associated with known solutions.

According to one aspect of the present invention a system includes a ferromagnetic blade mount, a magnetic sensor, and a processor. The ferromagnetic blade mount includes a magnetically encoded region. The magnetic sensor is configured to measure magnetic flux linked with the magnetically encoded region. The processor is communicably coupled with the magnetic sensor to compute a blade health indicator based, at least in part, on the measured magnetic flux.

In a further aspect a system includes a magnetically encoded ferromagnetic element, a magnetic sensor, and a processor. The magnetically encoded ferromagnetic element is fixedly coupled to a blade mount. The magnetic sensor is configured to measure magnetic flux linked with the magnetically encoded ferromagnetic element. The processor is communicably coupled with the magnetic sensor to compute a blade health indicator based, at least in part, on the measured magnetic flux.

A yet further aspect provides a method that includes magnetically encoding at least one region of a ferromagnetic blade mount. The method further includes measuring magnetic flux linked with each magnetically encoded region. The method also includes computing a blade health indicator based, at least in part, on the measured magnetic flux.

Various aspects and embodiments of the present invention will now be described in connection with the accompanying drawings, in which:
FIG. 1 illustrates an example blade assembly of a wind turbine, according to one embodiment;
FIG. 2 illustrates an example sensor assembly for monitoring a turbine blade, according to one embodiment;
FIG. 3 illustrates an example sensor assembly for monitoring a turbine blade, according to another embodiment;
FIG. 4 illustrates an example sensor assembly for monitoring a turbine blade, according to yet another embodiment;
FIG. 5 is illustrates a conductor assembly for magnetically encoding a region of a blade mount, according to one embodiment;
FIG. 6 is a simplified block diagram of an example blade monitoring system, according to one embodiment;
FIG. 7 is a simplified block diagram of a processor for use in the blade health monitoring system, according to one embodiment; and
FIG. 8 is a flowchart of an example process for blade health monitoring, according to one embodiment.

Embodiments presented herein describe methods and systems for monitoring health of turbine blades. The method is based on magnetostrictive measurement of vector components of stress occurring in the turbine blade hub or rotor. Although embodiments presented herein are described in conjunction with wind turbines, application of the embodiments to other types of fluid turbines such as, but not limited to, gas turbines, and hydropower turbines, is also envisioned.

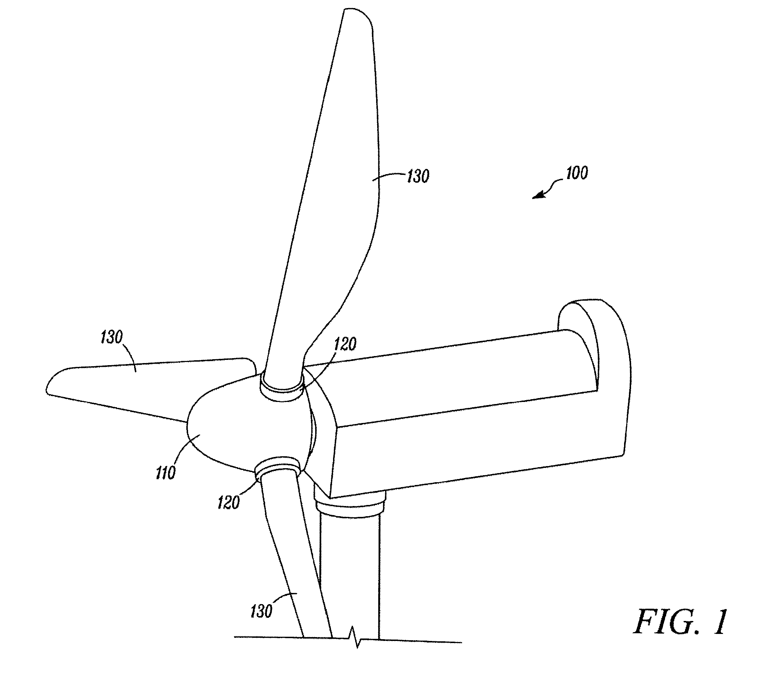

FIG. 1 illustrates an example wind turbine, according to one embodiment. The wind turbine includes a blade assembly 100 that converts wind energy into rotational energy to run a generator. The blade assembly 100 includes a blade hub 110. The blade hub 110 may comprise one or more ferromagnetic materials such as, but not limited to, iron, nickel, cobalt, alloys thereof, and so forth. Alternatively, the blade hub 110 may comprise lightweight structural materials such as, but not limited to, aluminum, carbon fiber, fiber glass, composites, and so forth. The blade hub 110 may be shaped to enhance aerodynamic properties of the wind turbine. Alternatively, the blade hub 110 may be shaped to optimize structural strength, and include additional aerodynamic fairings mounted onto the blade hub 110. The blade hub 110 is attached to a shaft of the generator. The blade hub 110 includes one or more blade mount rings 120. The number of blade mount rings 120 depends on the number of blades of the wind turbine. Typically, wind turbines include three-blade designs, thus warranting three blade mount rings 120. The blade mount rings 120 enable mounting of blades 130 to the blade hub 110.

The blade mount ring 120 may be a part of the pitch control mechanism of the blade 130. Pitch control mechanisms may be used in pitch controlled wind turbines to control the pitch of the blade, and thus vary the amount of "lift" that the blade 130 generates. The blade mount ring 120 also includes the pitch control gearing (not shown).

Alternatively, the blade mount ring 120 may be a flange portion of the blade hub 110. Such a flange portion type blade mount ring 120 may typically be deployed in passive stall controlled wind turbines, for example. Passive stall controlled wind turbines include blades 130 that are coupled to the blade hub 110 at a fixed angle. The blades 130 are not capable of pitching in passive stall controlled wind turbines. The blades 130 may be bolted onto the blade hub 110 at the blade mount rings 120.

For the purpose of this disclosure, a blade mount is referred to any structure of the wind turbine onto which the blades 130 are mounted. The blade mount may thus be the blade mount rings 120, or alternatively, the blade hub 110.

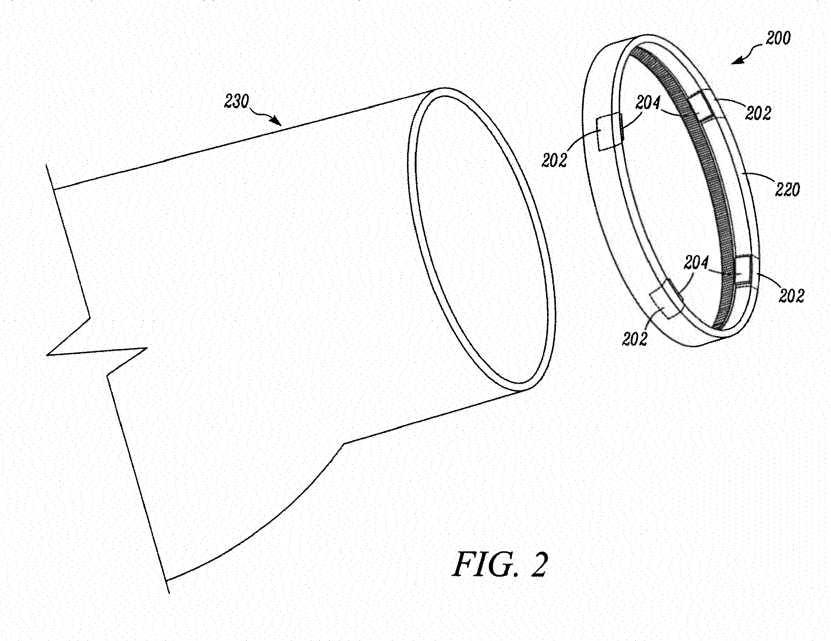

FIG. 2 illustrates an example sensor assembly 200, according to one embodiment. Magnetic encoding is a defined magnetization of a section of a ferromagnetic object, as described in more detail in, e. g., US patent 7,631,564. The sensor assembly 200 includes a ferromagnetic blade mount 220, one or more magnetically encoded regions 202, and one or more magnetic sensors 204. The ferromagnetic blade mount 220 illustrated is a blade mount ring. The blade mount ring may be a part of the pitch control mechanism of the blade 230. Alternatively, the blade mount ring may be a blade mounting flange of a blade hub (such as blade hub 110 illustrated in FIG. 1). The sensor assembly 200 is configured to monitor the mechanical stress occurring in the ferromagnetic blade mount 220. Since the blade 230 is directly mounted on the ferromagnetic blade mount 220, the stresses occurring in the ferromagnetic blade mount 220 may be related to the stresses occurring in the blade 230, apart from residual stress within the blade 230. In other words, the stresses in the blade 230 due to aerodynamic load of the wind, ice formed on the blade 230, and debris accumulated on the blade 230 may also relate to stresses occurring in the ferromagnetic blade mount 220.

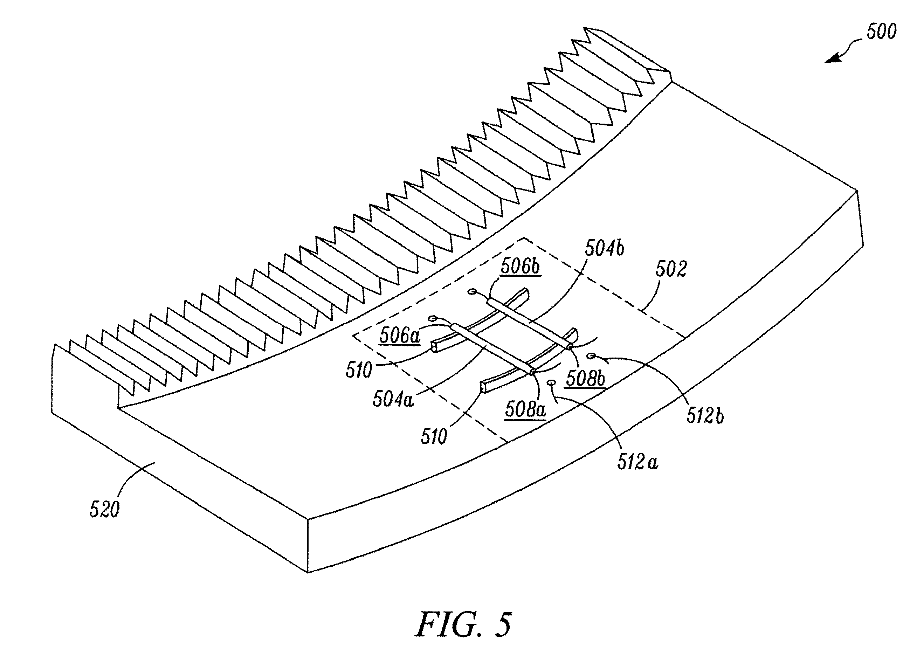

The ferromagnetic blade mount 220 includes one or more magnetically encoded regions 202. The magnetically encoded regions 202 are localized regions of the ferromagnetic blade mount 220 that have been configured (e.g., excited) to exhibit a predefined magnetic polarization, and predefined field strength. A magnetic encoder (not shown in FIG. 1) may be used to form the magnetically encoded regions 202. An example conductor assembly for exciting and forming the magnetically encoded regions 202 is described in conjunction with FIG. 5. The magnetic encoder excites the conductor assembly to form the magnetically encoded regions 202. The ferromagnetic blade mount 220 exhibits the property of magnetostriction. Magnetostrictive materials undergo mechanical deformation in response to changes in a surrounding magnetic field. Similarly, when such materials are subjected to mechanical deformation, the magnetic susceptibility of the material may change (this is commonly referred to as the "inverse magnetorestrictive effect"). With respect to the ferromagnetic blade mount 220, when subjected to external forces, the magnetic flux linked with the magnetically encoded region 202 changes, due to the property of magnetostriction. Such a change in the magnetic flux is proportional to the external forces. Thus, a change in the magnetic flux of the magnetically encoded region 202 is representative of the stress occurring in the blade 230.

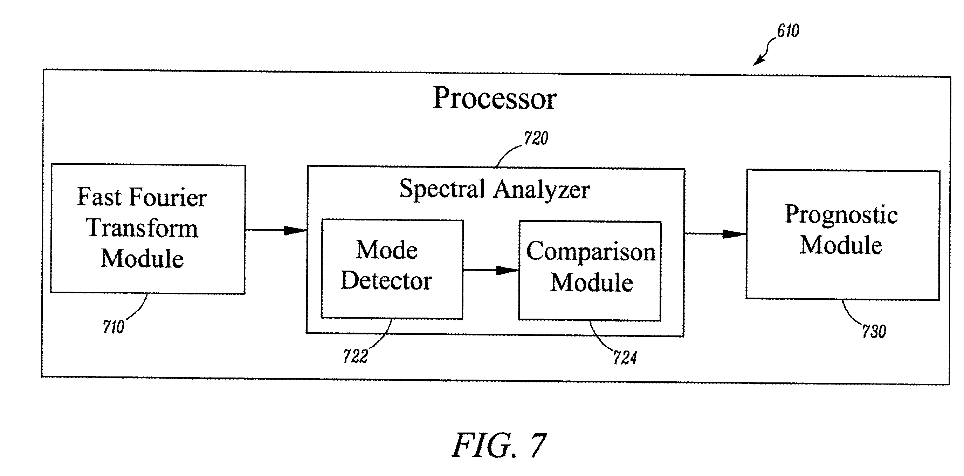

The sensor assembly 200 further includes one or more magnetic sensors 204. The magnetic sensors 204 are magnetically coupled to the magnetically encoded regions 202. Specifically, the magnetic sensors 204 may be positioned in close proximity to the magnetically encoded regions 202, such that the magnetic sensors 204 can measure the magnetic flux linked with the magnetically encoded regions 202. The magnetic sensors 204 may be coupled in proximity to the magnetically encoded regions 202 using a suitable coupling means, such as, but not limited to, adhesives, epoxy resins, or adhesive tape. The magnetic sensor 204 may include, for example, a magnetoresistive sensor, a Hall Effect sensor, a fluxgate sensor, and/or a magnetoimpedance sensor. The magnetic sensor 204 may be a broadband sensor. Broadband sensors are sensors that exhibit a substantially constant sensitivity over a large band of operating frequencies. The magnetic sensor 204 measures the magnetic flux linked with the magnetically encoded regions 202, and transmits the measurements to a processor (e.g., see FIG. 7) configured to process the measurements and generate a blade health indicator. One example processor is described in conjunction with FIG. 7.

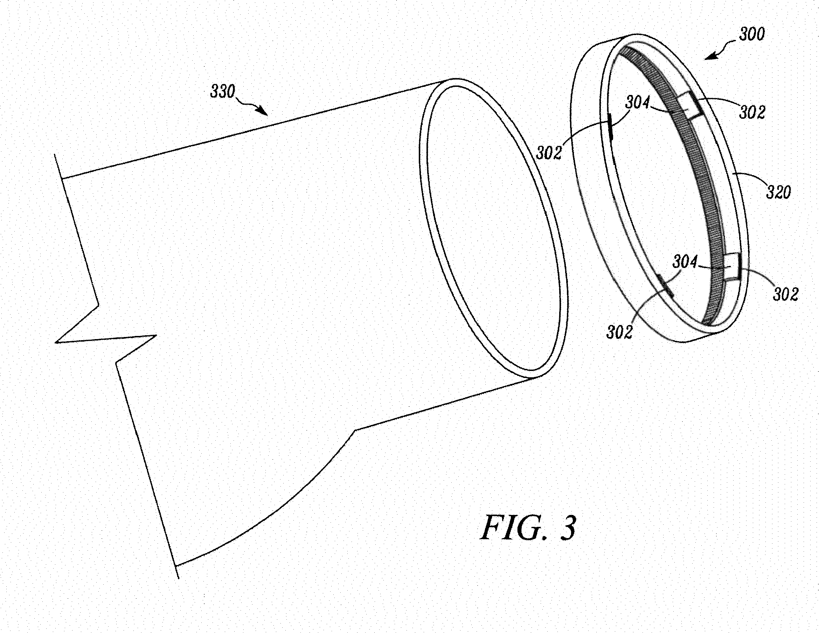

Referring now to FIG. 3, an example sensor assembly 300 is illustrated, according to another embodiment. The sensor assembly 300 includes a blade mount 320, one or more ferromagnetic elements 302, and one or more magnetic sensors 304. Such a sensor assembly 300 may be deployed for installations where the blade mount 320 is made of materials that do not exhibit the property of magnetostriction, such as, for example, composite materials and/or lightweight metals (e.g., aluminum or titanium). However, it should be appreciated, that the sensor assembly 300 may also be deployed for installations where the blade mount 320 is made of ferromagnetic materials that exhibit magnetostriction.

The blade mount 320 illustrated is a blade mount ring similar to the blade mount 220 described in conjunction with FIG. 2. The blade mount 320 may be part of the blade pitch control mechanism, or may be the blade mounting flange of the blade hub (such as blade hub 110 illustrated in FIG. 1).

The ferromagnetic elements 302 are fixedly coupled to the blade mount 320. The ferromagnetic elements 302 are implements made of a ferromagnetic material such as, for example, iron, nickel, cobalt, alloys thereof, and so forth. The ferromagnetic elements 302 may be permanent magnets. Alternatively, the ferromagnetic elements 302 may be externally excited electromagnet elements. A magnetic encoder (not shown in FIG. 3) may be used to magnetically encode the ferromagnetic elements 302 to exhibit a predefined magnetic polarization and predefined field strength. The ferromagnetic elements 302 may be fixedly coupled to the blade mount 320 using, for example, adhesives, epoxy resins, welding, or soldering. In one implementation, the blade mount 320 may have notches cut out, and the ferromagnetic elements 302 may be inserted into the notches. The notches and the ferromagnetic elements 302 may be designed for a close fit, allowing no relative movement. Such a design may enhance the ability for stresses in the blade mount 320 to be effectively transmitted to the ferromagnetic elements 302. Due to the property of magnetostriction, the magnetic flux linked with the ferromagnetic elements 302 changes with changes in stresses transmitted to the ferromagnetic elements 302 from the blade mount 320.

The magnetic sensors 304 are magnetically coupled to the ferromagnetic elements 302. Specifically, the magnetic sensors 304 may be positioned in close proximity to the ferromagnetic elements 302, such that the magnetic sensors 304 can measure the magnetic flux linked with the ferromagnetic elements 302. The magnetic sensors 304 may be coupled in close proximity to the ferromagnetic elements 302 using a suitable coupling means, such as, but not limited to, adhesives, epoxy resins, or adhesive tape. The magnetic sensor 304 may be a magnetoresistive sensor, a Hall Effect sensor, a fluxgate sensor, or a magnetoimpedance sensor. The magnetic sensor 304 may be a broadband sensor. Broadband sensors are sensors that exhibit a substantially constant sensitivity over a large band of operating frequencies. The magnetic sensor 304 measures the magnetic flux linked with the ferromagnetic elements 302, and transmits the measurements to a processor configured to process the measurements and generate a blade health indicator. One example processor is described in conjunction with FIG. 7.

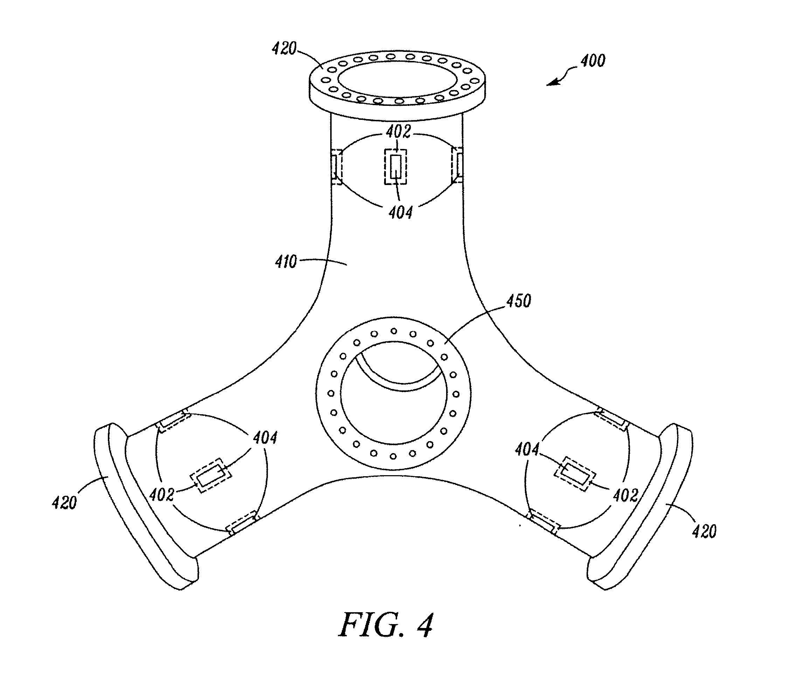

Referring now to FIG. 4, an example sensor assembly 400 is illustrated, according to yet another embodiment. The sensor assembly 400 is deployed on a blade hub 410. The sensor assembly 400 may typically be deployed in passive stall controlled wind turbines, for example. The blade hub 410 is in turn coupled to the generator shaft using a flange 450.

The sensor assembly 400 includes one or more magnetically encoded regions 402, and one or more magnetic sensors 404. The magnetically encoded regions 402 are similar to the magnetically encoded regions 202 described in conjunction with FIG. 2. Such an implementation of the sensor assembly 400 may typically be deployed in installations where the blade hub 410 is made of a ferromagnetic material. However, in installations where the blade hub 410 is made of a composite material, or a non-ferromagnetic material such as aluminum or titanium, the sensor assembly 400 may alternatively be deployed using ferromagnetic elements (such as ferromagnetic elements 302) similar to those described in conjunction with FIG. 3.

The sensor assembly 400 further includes one or more magnetic sensors 404 similar to the magnetic sensors 204, and 304 described in conjunction with FIGS. 2 and 3 respectively.

As regards the sensor assemblies 200, 300, and 400, the number and position of magnetic encodings (magnetically encoded regions and ferromagnetic elements are collectively referred to as magnetic encodings hereinafter), and magnetic sensors may be selected depending on the monitoring requirements of the blade health monitoring system. For instance, two magnetic encodings, placed diametrically opposite on the blade mount, and in the plane of rotation of the blades, may be used to monitor the lead/lag bending stresses acting on the blade. Further, two magnetic encodings, placed diametrically opposite on the blade mount, and in a plane perpendicular to the plane of rotation of the blades, may be used to monitor the flapping stresses acting on the blade. Two or more magnetic encodings may also be capable of use in monitoring the torsional stresses acting on the blade about the pitch axis of the blade. In other words, the blade health monitoring system may employ any number of magnetic encodings at any position on the blade mount to which the blade effectively transmits its mechanical stresses, to enable measurement of vector components of stresses occurring in the blades and consequently the blade mount.

Referring now to FIG. 5, an example conductor assembly 500 for magnetically encoding a region of a blade mount is illustrated, according to one embodiment. The conductor assembly 500 is coupled to the blade mount 520. The blade mount 520 illustrated is a blade mount ring used in, for example, the blade pitch control mechanism of a wind turbine, a blade directly mounted on the blade mount ring. However, a similar conductor assembly 500 may also be deployed for other portions of the blade mount, such as the blade hub, or the blade mounting flange.

The conductor assembly 500 includes conductors 504a and 504b, and spacers 510. The spacers 510 maintain physical separation between the conductors 504a, 504b and the blade mount 520.

The conductors 504a, 504b are disposed proximate to the blade mount 520 with a gap between the member 504a, 504b and the blade mount 520. The conductors 504a, 504b may be reinforced isolated copper bars, although other suitable conductors are within the scope of the system.

The conductors 504a, 504b have a first end 506a, and 506b, respectively, coupled to the blade mount 402 and the second end 508a, and 508b, respectively, coupled to the magnetic encoder (not shown in FIG. 5), such that the magnetic encoder, the conductors 504a and 504b individually, and the blade mount 520 are in a series connection. The magnetic encoder may be connected to the conductors 504a, 504b, and the blade mount 520 through suitable terminal leads such as jumpers or wires.

For the positive conductor 504a, the magnetic encoder positive terminal is coupled to the second end 508a of the positive conductor 504a. The magnetic encoder negative terminal is coupled to the conductor 512a. For the negative conductor 504b, the magnetic encoder negative terminal is coupled to the second end 508b of the negative conductor 504b. The magnetic encoder positive terminal is connected to the conductor 512b. The ground terminal may be connected to the blade mount 520.

Electrical signals may travel through the blade mount 520 such that the magnetically encoded regions 502 are generated on the blade mount 520. One of the features of such a conductor assembly 500 is the ability to magnetically encode localized regions in the blade mount. In particular, steel blade mounts 520 have a high relative permeability and the electric currents that travel through the steel blade mount 520 create distinct encoded channels.

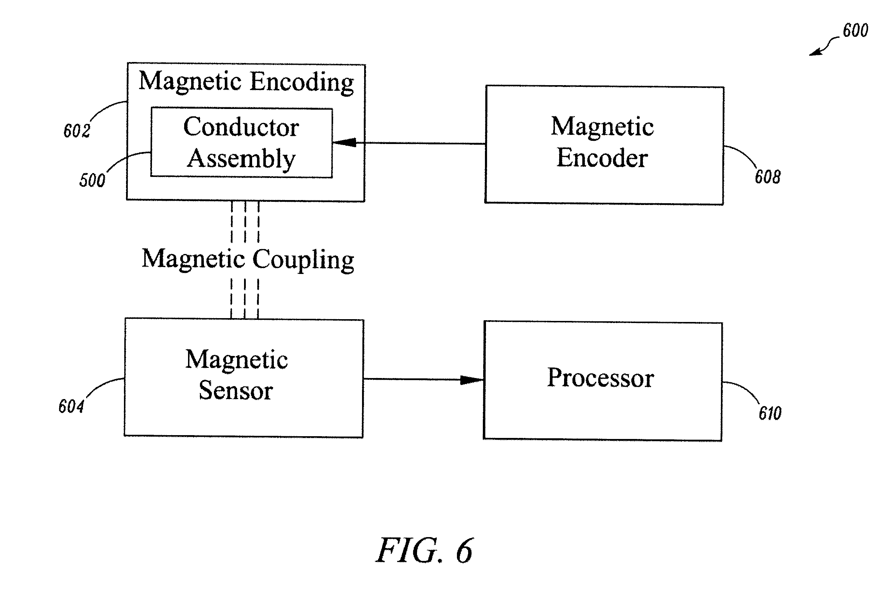

Referring now to FIG. 6, a simplified block diagram of a turbine blade monitoring system 600 is illustrated, according to one embodiment. The turbine blade monitoring system 600 includes one or more magnetic encodings 602, one or more magnetic sensors 604, a magnetic encoder 608, and a processor 610.

The magnetic encoder 608 excites the magnetic encodings 602 using the conductor assembly 500 coupled to the magnetic encodings 602. The magnetic encoder 608 provides a known excitation signal to the magnetic encoding 602 through the conductor assembly 500. Responsive to the excitation signal, the magnetic encoding 602 induces a magnetic field in the magnetic encoding 602. The magnetic encoder 608 causes the magnetic encoding 602 to exhibit a magnetic field of known polarization and known field strength. In some implementations, the magnetic encoder 608 may be a direct current (DC) source, providing a DC voltage to the conductor assembly 500 and the magnetic encoding 602. The magnetic encoder 608 may be powered by a battery. Alternatively, the magnetic encoder 608 may be a high stability switched mode power supply (HS-SMPS). The HS-SMPS may operate on the AC power generated by the wind turbine generator, and provide a very stable DC voltage to excite the magnetic encoding 602. In other implementations, the magnetic encoder 608 may be a pulse generator, configured to periodically excite the magnetic encoding 602 with electrical pulses of known voltage. The electrical pulses provided by the magnetic encoder 608 may have to be uniform in order to maintain stability and/or intensity of the magnetic encoding 602. The magnetic encoder 608 is electrically coupled to the magnetic encoding 602 through the conductor assembly 500. In one implementation, the magnetic encoder 608 provides the excitation voltage to the magnetic encoding 602 through wireless transmission, such as inductive transmission. Alternatively, magnetic encoder 608 may provide the excitation voltage to the magnetic encoding 602 through wired transmission.

The specific implementation of the magnetic encoding 602, such as location of the magnetic encodings, whether the magnetic encodings are ferromagnetic elements or magnetically encoded regions, and the count of magnetic sensors 604 may be a design decision based on whether the structural part is a ferromagnetic material or not, whether the installation is active pitch controlled, or passive stall controlled, whether the monitoring system 600 is a retrofit to an existing turbine installation or an integrated system on an brand new turbine installation, and so forth.

The magnetic sensor 604 is similar to the magnetic sensors 204, 304, and 404 described in conjunction with FIGS. 2, 3, and 4 respectively. The magnetic sensor 604 is configured to measure the magnetic flux linked with the magnetic encoding 602. The magnetic sensor 604 is magnetically coupled to the magnetic encoding 602. Such a magnetic coupling may be established by positioning the magnetic sensor 604 in close proximity to the magnetic encoding 602, such that the magnetic sensor 604 lies within the magnetic field of the magnetic encoding 602. The magnetic sensor 604 may be a broadband sensor, configured to transmit a flux measurement signal to the processor 610. Broadband sensors are sensors that exhibit a substantially constant sensitivity over a large band of operating frequencies. The magnetic sensor 604 may transmit the flux measurement signal to the processor 610 through a wireless link such as a Bluetooth (R) link, or through a wired link such as a serial data connection. The magnetic sensor 604 may be powered using wireless power transmission, or through wired power transmission.

The processor 610 receives the flux measurement signal from the magnetic sensor 604, and computes a blade health indicator. Referring now to FIG. 7, an example implementation of the processor 610 is described, according to one embodiment. The processor 610 includes a Fast Fourier Transform (FFT) module 710, a spectral analyzer 720, and a prognostic module 730. The spectral analyzer 720 further includes a mode detector 722, and a comparison module 724.

The FFT module 710 computes a spectral signature based on the measured magnetic flux. The spectral signature includes the frequency content of the measured magnetic flux, plotted against spectral amplitude of the various frequencies. Natural frequencies of the blade for various modes of vibration exhibit local peaks of the spectral amplitude. The FFT module 710 transfers the spectral signature to the spectral analyzer 720 for identifying the natural frequencies for various modes of vibration of the blade.

The mode detector 722 identifies the natural frequency of vibration of particular modes of vibration of the blade, based on the computed spectral signature. The mode detector 722 may use, for example, curve fitting algorithms, or peak detection algorithms, to identify peaks of spectral amplitude in the spectral signature. The mode detector 722 then transfers the identified frequencies at which the peaks of spectral amplitude occur to the comparison module 724.

The comparison module 724 compares the identified natural frequencies with healthy state natural frequencies of the various mode of vibration of the blade. The comparison module 724 may have stored thereon, the healthy state natural frequencies of various modes of vibration of the blade. The healthy state natural frequencies may be identified from mathematical analysis, or simulations. Alternatively, the healthy state natural frequencies may be identified by the mode detector 722 while the turbine installation is still new. The comparison module 724 then transfers the difference in the identified natural frequency and the healthy state natural frequency for each mode of vibration, to the prognostic module 730.

The prognostic module 730 then generates a blade health indicator based on the difference in the identified natural frequency and the healthy state natural frequency for each mode of vibration. Changes in natural frequencies for various modes of vibration typically accurately represent structural changes to the blade including for example, structural damage to the blade such as cracks, debris accumulated on the blade, ice formed on the blade, and so forth. The blade health indicator may be as simple as an audible alarm tone, or an alarm lamp. Alternatively, the blade health indicator may be the change in natural frequency associated with each mode of vibration of the blade. It is to be understood that the health indicator generated by the prognostic module 730 may be viewed at a location remote from the turbine installation. The prognostic module 730 of the processor 610 may be coupled with an output device (not shown), for example, by means of wireless communication, in order to receive the health indicator data generated by the prognostic module 730. Further, the health indicator may be categorized in different level based on the deviation value of identified natural frequency and the healthy state natural frequency. For example, in case of very high deviation valve, the health indicator may be represented with red light and audible alarm. This may be an indication that the turbine blade 130, 230, or 330 may have undergone substantial structural change for which the turbine blade 130, 230, or 330 may need immediate inspection.

In one example implementation, the FFT module 710, the spectral analyzer 720, the prognostic module 730, the mode detector 722, and the comparison module 724 are implemented as software instructions capable of being executed on the processor 610. In such an implementation, the software instructions may be stored on a non-transitory computer readable medium such as, but not limited to, hard disc drives, solid state memory devices, random access memory (RAM) linked with the processor 610, and so forth. The processor 610 may be, for example, a general purpose microprocessor, a microcontroller, a programmable logic device, and so forth. An example computer system including such an implementation of the processor 610, may also include peripheral input devices such as a keyboard and a pointing device, peripheral output devices such as a visual display unit, and one or more network interfaces such as a Bluetooth ® adaptor, an IEEE 802.11 interface, an IEEE 802.3 ethernet adaptor, and so forth. Alternatively, the processor 610 may be implemented as a special purpose processor including the various modules hard-coded into the special purpose processor. Components of the computer system may be linked by one or more system busses. It should be appreciated that computer system described herein is illustrative and non-limiting. Other implementations of the computer system are within the scope of the present disclosure.

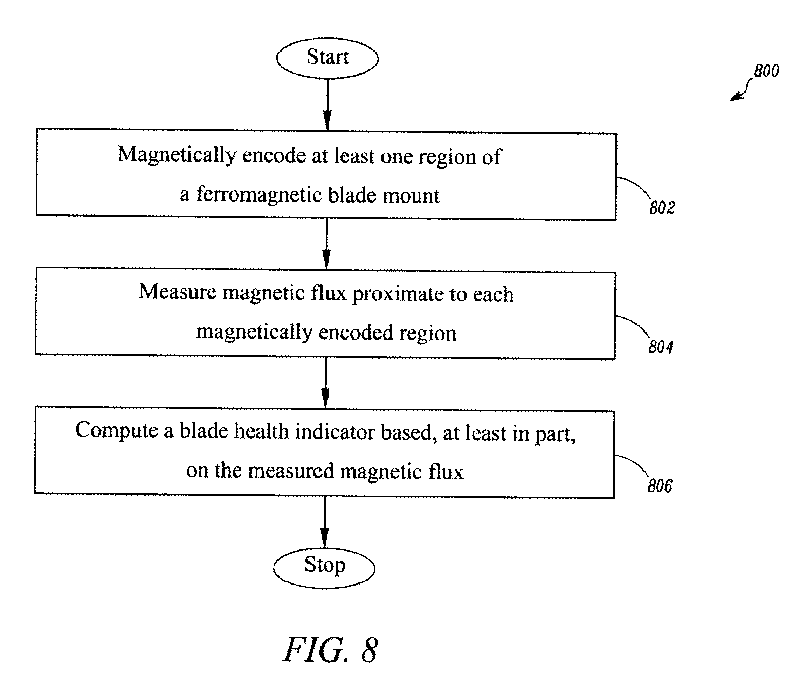

Referring now to FIGS. 6 and 8, a flowchart of an example method 800 for monitoring a turbine blade using the blade health monitoring system 600 is shown, according to one embodiment. The method 800 computes a blade health indicator based on measured magnetic flux linked with a magnetically encoded region on a blade mount. The magnetic flux linked with the magnetically encoded region of the blade mount changes with the changes in stress occurring in the blade mount, under the load of varying wind conditions.

At 802, the blade health monitoring system 600 magnetically encodes at least one region of a blade mount. The blade mount may be a steel ring such as the blade mount ring of the pitch control mechanism of a wind turbine. Alternatively, the blade mount may be the blade hub of a passive stall controlled wind turbine. Other structural parts of the wind turbine adapted to couple the turbine blade with a rotor shaft of the generator, such as the blade mounting flange, may also have magnetically encoded regions thereon. The blade mount may be magnetically encoded using a magnetic encoder. For example, when the blade mount may be composed of a ferromagnetic material, the magnetic encoder may magnetically encode localized regions of the blade mount. Alternatively, when the blade mount may be composed of a non ferromagnetic material, the blade mount may be provided with magnetically encoded ferromagnetic elements. The magnetically encoded ferromagnetic elements may be coupled with the blade mount using a suitable coupling means, such as an adhesive, welding, soldering, or by inserting the ferromagnetic elements into a notch cut into the blade mount. The magnetically encoded ferromagnetic elements may be magnetically encoded by a suitable magnetic encoding method, such as application of electrical pulses of known voltage.

At 804, the blade health monitoring system 600 measures magnetic flux linked with each magnetically encoded region. The magnetic flux linked with each magnetically encoded region of the blade mount may be measured using one or more magnetic sensors. The magnetic sensors are magnetically coupled to the magnetically encoded regions, by being positioned in close proximity to the magnetically encoded regions such that the magnetic sensors lie within the magnetic field of the magnetically encoded region. The turbine blade may be exposed to aerodynamic loads due to varying wind conditions, thus causing mechanical stresses within the blades and blade mount. The mechanical stress occurring in the blade mount cause the magnetic flux linked with the magnetically encoded region to change.

At 806, the blade health monitoring system 600 computes a blade health indicator based, at least in part, on the measured magnetic flux. As described in conjunction with FIG. 6 above, the blade health monitoring system 600 computes a spectral signature of the measured magnetic flux, using an FFT algorithm. The spectral signature includes various frequency components of the measured magnetic flux plotted against the spectral amplitude. Spectral amplitude peaks in the spectral signature typically represent natural frequency of vibration for a particular mode of vibration of the blade.

The blade health monitoring system 600 then uses curve fitting or peak detection algorithms to identify the spectral amplitude peaks in the spectral signature. The curve fitting algorithm may identify the spectral amplitude peaks having similar characteristics as expected natural frequency peaks. Once the natural frequencies for various modes of vibration of the blade have been identified, the blade health monitoring system 600 then compares the identified natural frequencies to the healthy state natural frequencies of corresponding modes of vibration. Deviations from the healthy state natural frequencies above a predefined threshold indicate structural changes to the blade including structural damage, debris accumulated on the blade, or ice formed on the blades.

Based on the deviation between the healthy state natural frequency and the identified natural frequency of the turbine blade, the blade health monitoring system 600 computes a blade health indicator. The health indicator may be indicated by means of an alphanumeric display, a visual depiction of changes in the spectral signature, a flashing light or the like. Alternatively, the health indicator may be indicated by means of an audible alarm. Further, the health indicator may be categorized in different levels based on the deviation valve of identified natural frequency from the healthy state natural frequency. For example, in case of very high deviation valve, the health indicator may be represented with red light and audible alarm. This may be an indication that the turbine blade may have undergone substantial structural change for which the turbine blade may need immediate inspection.

Various aspects and embodiments of the present invention are defined by the following numbered clauses:
1. A system comprising:
   a ferromagnetic blade mount having a magnetically encoded region;
   a magnetic sensor configured to measure magnetic flux linked with the magnetically encoded region; and
   a processor communicably coupled with the magnetic sensor to compute a blade health indicator based, at least in part, on the measured magnetic flux.
2. The system of clause 1, wherein the processor comprises:
   a Fast Fourier Transform (FFT) module for computing a spectral signature based on the measured magnetic flux;
   a spectral analyzer for comparing the computed spectral signature with a healthy state spectral signature; and
   a prognostic module for generating the blade health indicator responsive to the comparison.
3. The system of any preceding clause, wherein the spectral analyzer comprises:
   a mode detector for identifying a natural frequency of vibration of a particular mode of vibration of a turbine blade, based on the computed spectral signature; and
   a comparison module for comparing the identified natural frequency with a healthy state natural frequency of the particular mode of vibration.
4. The system of any preceding clause, wherein the prognostic module generates the blade health indicator based on the comparison of the identified natural frequency and the healthy state natural frequency of the particular mode of vibration.
5. The system of any preceding clause, further comprising a magnetic encoder for magnetically encoding a region of the ferromagnetic blade mount.
6. The system of any preceding clause, further comprising at least one conductor assembly electrically coupled to the magnetic encoder and the ferromagnetic blade mount in series for effecting magnetic encoding of the region of the ferromagnetic blade mount.
7. The system of any preceding clause, wherein the blade mount is a steel ring adapted to couple the blade with a nacelle of the turbine.
8. The system of any preceding clause, wherein the blade mount is a blade hub adapted to couple the blade with a nacelle of the turbine.
9. The system of any preceding clause, wherein the magnetic sensor is one of a magnetoresistive sensor, a Hall Effect sensor, a fluxgate sensor, and a magnetoimpedance sensor.
10. A system comprising:
   a magnetically encoded ferromagnetic element fixedly coupled to a blade mount;
   a magnetic sensor configured to measure magnetic flux linked with the magnetically encoded ferromagnetic element; and
   a processor communicably coupled with the magnetic sensor to compute a blade health indicator based, at least in part, on the measured magnetic flux.
11. The system of an preceding clause, wherein the processor comprises:
   a Fast Fourier Transform (FFT) module for computing a spectral signature based on the measured magnetic flux;
   a spectral analyzer for comparing the computed spectral signature with a healthy state spectral signature; and
   a prognostic module for generating the blade health indicator responsive to the comparison.
12. The system of any preceding clause, wherein the spectral analyzer further comprises:
   a mode detector for identifying a natural frequency of vibration of a particular mode of vibration of a turbine blade, based on the computed spectral signature; and
   a comparison module for comparing the identified natural frequency with a healthy state natural frequency of the particular mode of vibration.
13. The system of any preceding clause, wherein the prognostic module generates the blade health indicator based on the comparison of the identified natural frequency and the healthy state natural frequency of the particular mode of vibration.
14. The system of any preceding clause, wherein the blade mount is a blade mount ring adapted to couple the blade with a nacelle of the turbine.
15. The system of any preceding clause, wherein the blade mount is a blade hub adapted to couple the blade with a nacelle of the turbine.
16. The system of any preceding clause, wherein the magnetic sensor is one of a magnetoresistive sensor, a Hall Effect sensor, a fluxgate sensor, and a magnetoimpedance sensor.
17. A method comprising:
   magnetically encoding at least one region of a ferromagnetic blade mount;
   measuring magnetic flux linked with each magnetically encoded region; and
   computing a blade health indicator based, at least in part, on the measured magnetic flux.
18. The method of any preceding clause, wherein the computing the blade health indicator comprises:
   computing a spectral signature based on the measured magnetic flux using Fast Fourier Transform;
   comparing the computed spectral signature with a healthy state spectral signature; and
   generating the blade health indicator responsive to the comparison.
19. The method of any preceding clause further comprising:
   identifying a natural frequency of vibration of a particular mode of vibration of a turbine blade, based on the computed spectral signature;
   comparing the identified natural frequency with a healthy state natural frequency of the particular mode of vibration; and
   generating the blade health indicator based on the comparison of the identified natural frequency and the healthy state natural frequency of the particular mode of vibration.

## Claims

1. A system (200) comprising:
a ferromagnetic blade mount (220) having a magnetically encoded region (202);
a magnetic sensor (204) configured to measure magnetic flux linked with the magnetically encoded region; and
a processor communicably coupled with the magnetic sensor (204) to compute a blade health indicator based, at least in part, on the measured magnetic flux.

2. The system (200) of claim 1, wherein the processor comprises:
a Fast Fourier Transform (FFT) module for computing a spectral signature based on the measured magnetic flux;
a spectral analyzer for comparing the computed spectral signature with a healthy state spectral signature; and
a prognostic module for generating the blade health indicator responsive to the comparison.

3. The system (200) of claim 2, wherein the spectral analyzer comprises:
a mode detector for identifying a natural frequency of vibration of a particular mode of vibration of a turbine blade, based on the computed spectral signature; and
a comparison module for comparing the identified natural frequency with a healthy state natural frequency of the particular mode of vibration.

4. The system (200) of claim 2 or claim 3, wherein the prognostic module generates the blade health indicator based on the comparison of the identified natural frequency and the healthy state natural frequency of the particular mode of vibration.

5. The system (200) of any preceding claim further comprising a magnetic encoder for magnetically encoding a region of the ferromagnetic blade mount (220).

6. The system (200) of claim 5 further comprising at least one conductor assembly electrically coupled to the magnetic encoder and the ferromagnetic blade mount in series for effecting magnetic encoding of the region of the ferromagnetic blade mount (220).

7. The system (200) of any preceding claim, wherein the blade mount (220) is a steel ring adapted to couple the blade with a nacelle of the turbine.

8. The system (200) of any preceding claim, wherein the blade mount (220) is a blade hub adapted to couple the blade with a nacelle of the turbine.

9. The system (200) of any preceding claim, wherein the magnetic sensor (204) is one of a magnetoresistive sensor, a Hall Effect sensor, a fluxgate sensor, and a magnetoimpedance sensor.

10. A method comprising:
magnetically encoding at least one region of a ferromagnetic blade mount (220);
measuring magnetic flux linked with each magnetically encoded region; and
computing a blade health indicator based, at least in part, on the measured magnetic flux.

11. The method of claim 10, wherein the computing the blade health indicator comprises:
computing a spectral signature based on the measured magnetic flux using Fast Fourier Transform;
comparing the computed spectral signature with a healthy state spectral signature; and
generating the blade health indicator responsive to the comparison.

12. The method of claim 10 or claim 11 further comprising:
identifying a natural frequency of vibration of a particular mode of vibration of a turbine blade (130), based on the computed spectral signature;
comparing the identified natural frequency with a healthy state natural frequency of the particular mode of vibration; and
generating the blade health indicator based on the comparison of the identified natural frequency and the healthy state natural frequency of the particular mode of vibration.
